# EUROPEAN PATENT APPLICATION

(11) **EP 4 393 980 A1**
(43) Date of publication of application: **03.07.2024**
(21) Application number: 22860630.7
(22) Date of filing: 26.08.2022
(51) Int. Cl.: C08G 69/40

(54) **BIO-BASED POLYAMIDE ELASTOMER AND PREPARATION METHOD THEREFOR**

(30) Priority: 27.08.2021 CN 202110992871
(71) Applicant: Cathay Biotech Inc., Shanghai 201203 (CN); CIBT America Inc., Newark, DE 19713 (US); Cathay (Jinxiang) Biomaterial Co., Ltd., Jining, Shandong 272211 (CN)
(72) Inventor: ZHOU, Xiaohui, Shanghai 201203 (CN); LIU, Xiucai, Shanghai 201203 (CN)
(74) Representative: karo IP
(86) International application number: PCT/CN2022/115128
(87) International publication number: WO 2023/025284

(57) **Abstract**

Disclosed is a bio-based polyamide elastomer and a preparation method therefor. The bio-based polyamide elastomer is prepared using specific aliphatic diacid and pentanediamine prepared by biological methods as monomers. The polyamide elastomer of the present disclosure has excellent performance and stable monomer supply, solves the problem of excessively high cost of polyamide elastomer, expands the application scenarios of elastomers, and has high commercial value.

## Description

### Technical field

The present disclosure relates to a bio-based polyamide elastomer and a preparation method therefor.

### Background of Art

Thermoplastic elastomers are marketed in the form of various resin compositions such as polyurethanes, polystyrenes, polyolefins, polyesters, and polyamides, etc. Thermoplastic polyamide elastomer (TPAE) is a member of the family of thermoplastic elastomers, and its development and application started relatively late compared with the widely used thermoplastic polyurethane elastomers (TPUs), thermoplastic polyolefin elastomers (TPOs), styrene thermoplastic elastomers (SBCs), thermoplastic polyvinyl chloride elastomers (TPVCs), and thermoplastic polyether ester elastomers (TPEEs), and the like. Polyamide elastomers are widely used in the fields such as automobiles, sports equipment, medical instruments, seals, mechanical parts, etc., due to their good properties, such as high elasticity, low specific gravity, high resilience, and good low-temperature performance, etc.

Thermoplastic polyamide elastomers (TPAEs) are copolymers mainly composed of polyamide hard segments and polyether or polyester soft segments, wherein as the hard segment, the polyamide mainly includes PA6, PA66, PA11, and PA12, etc., and mainly determines the properties of thermoplastic polyamide elastomers including density, hardness, melting point, tensile strength, resistance to various organic chemicals, etc.; and the soft segment mainly includes polycaprolactones (PCLs), polyethylene glycols (PEGs), poly(propylene glycol) (PPGs), and polytetramethylene ether glycols (PTMEGs), etc., and determines properties of thermoplastic polyamide elastomers including low-temperature performance, hygroscopicity, antistatic properties, dyeing properties, and stability to certain chemicals, etc.

The production of polyamide elastomers has received a great deal of attention in recent years, and many companies and research institutes have filed patents application involving various synthesis techniques by using PA6, PA11, and PA12 as hard segments. At present, the most commonly commercialized polyamide elastomers are the PA12 series, such as the XPA series products from Ube Industries, Ltd., Japan, the PEBAX series products from Arkema, France, and the VESTAMID E series products from Germany Evonik Industrial Co., Ltd. The PA12 hard segment is generally produced using dodecylamino dodecanoic acid or laurolactam which is derived from petrochemical processes, is more expensive and is monopolized by a few companies. The difficulty in obtaining monomers stably brings challenges for the large-scale production of elastomers. The carbon chain of the monomer caprolactam that constitutes PA6 based elastomers is shorter, and the over performance of elastomers with the same hardness is not as good as that of long-chain nylon-based elastomers.

It has long been hoped that bio-based raw materials could be used to produce green elastomers with comparable performance to existing grades, thus solving the problem of fossil energy consumption and building a low-carbon society.

### Summary of the invention

The present disclosure provides a polyamide elastomer prepared using pentanediamine and long-chain (C10 to C18) aliphatic diacid which are prepared by biological methods, and a specific proportion of polytetramethylene ether glycol as raw materials, as well as a preparation method and use thereof. The elastomer has excellent performance and stable polymerization monomer supply, solves the problem of the excessively high cost of polyamide elastomer, expands the application scenarios of elastomers, and has very high commercial value.

The present disclosure provides a bio-based polyamide elastomer comprising a structural unit represented by formula C and a structural unit represented by formula D, which are connected by an ester group; wherein the structural unit represented by formula C comprises a structural unit represented by formula A and a structural unit represented by formula B, which are connected by an amide bond; 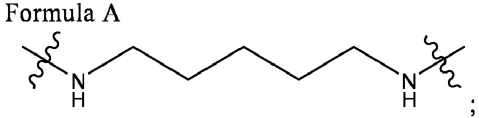 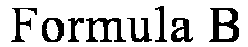 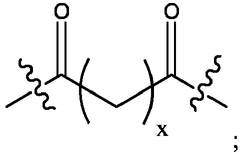 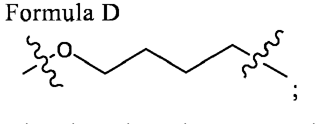
wherein, x is an integer ranging from 8 to 16;
wherein, the bio-based polyamide elastomer has a relative viscosity of 1.0 to 2.0, preferably 1.1 to 1.7, and more preferably 1.3 to 1.7.

In a specific embodiment of the present disclosure, the bio-based polyamide elastomer is a block copolymer.

In a specific embodiment of the present disclosure, a segment formed by the structural unit represented by formula C has a number-average molecular weight of 800 to 12,000, preferably 850 to 7,000, more preferably 1,400 to 7,000, for example 1,406, 2,140, 2,935, 4,948, 2,554, 3,763, 852, 1,494, 4,973, 3,162, and 4,778.

In a specific embodiment of the present disclosure, the bio-based polyamide elastomer has a number-average molecular weight of 10,000 to 70,000, preferably 10,000 to 40,000, more preferably 30,000 to 40,000, for example 39,596, 34,507, 35,880, 39,022, 38,158, 31,860, 22,739, 19,659 or 18,749, 33,711, 18,159.

In a specific embodiment of the present disclosure, a segment formed by the structural unit represented by formula D has a number-average molecular weight of 500 to 5,000, for example 1,000, 1,500, 2,000, 2,500, 3,000, 3,500, 4,000, and 4,500.

In a specific embodiment of the present disclosure, the structural unit represented by formula C further comprises a structural unit represented by formula E, and the structural units represented by formulas A, B, and E are connected by amide bonds,

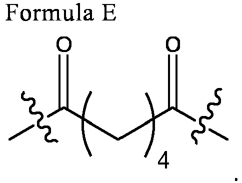

Preferably, the bio-based polyamide elastomer contains the structural unit represented by formula A in a molar content of 10 mol% to 40 mol%, the structural unit represented by formula B in a molar content of 15 mol% to 40 mol%, and the structural unit represented by formula D in a molar content of 35 mol% to 65 mol%, and the sum of the structural units represented by formulas A, B, and D is 100 mol%.

In some specific embodiments, the bio-based polyamide elastomer contains the structural unit represented by formula A in a molar content of 15 mol% to 30 mol%, the structural unit represented by formula B in a molar content of 20 mol% to 35 mol%, and the structural unit represented by formula D in a molar content of 40 mol% to 65 mol%, and the sum of the structural units represented by formulas A, B, and D is 100 mol%.

In some specific embodiments, the molar ratio of the structural units represented by formulas A, B, E and D is 18-25 : 18-30 : 1-10 : 40-65.

Preferably, the molar ratio of the structural unit represented by formula A to the structural unit represented by formula B is in a range from 1 : 1.0 to 1 : 1.5.

Preferably, the structural unit represented by formula C and the structural unit represented by formula D are contained in the bio-based polyamide elastomer in a mass content of 95 wt.% or more, more preferably 97 wt.% or more.

In a specific embodiment of the present disclosure, the raw materials of the bio-based polyamide elastomer comprise pentanediamine, a diacid and polytetramethylene ether glycol, wherein the diacid is any one or more selected from decanedioic acid, undecanedioic acid, dodecanedioic acid, tridecanedioic acid, tetradecanedioic acid, pentadecanedioic acid, hexadecanedioic acid, heptadecanedioic acid, and octadecanedioic acid.

In a specific embodiment of the present disclosure, the diacid further includes hexanedioic acid.

In a specific embodiment of the present disclosure, the bio-based polyamide elastomer is prepared by a method comprising steps of: polymerizing pentanediamine and a diacid to obtain a prepolymer, and then polymerizing the prepolymer and polytetramethylene ether glycol to obtain a bio-based polyamide elastomer.

In a specific embodiment of the present disclosure, the molar ratio of the prepolymer to polytetramethylene ether glycol is in a range from 0.7 : 1 to 2 : 1, preferably 0.8 : 1 to 1.5 : 1, more preferably 0.7 : 1 to 1.3 : 1, even more preferably 0.8 : 1 to 1.2 : 1, for example 0.94 : 1, 0.92 : 1, 1.12 : 1, 0.84 : 1, 1.10 : 1, 0.87 : 1, 0.93 : 1, 1.14 : 1, 1.48 : 1, 0.86 : 1, 1.45 : 1.

In a specific embodiment of the present disclosure, the polytetramethylene ether glycol has a number-average molecular weight of 500 to 5,000, for example PTMEG 1000 having a molecular weight of 1,000, and PTMEG 2000 having a molecular weight of 2,000.

In a specific embodiment of the present disclosure, one or both of pentanediamine and the long-chain aliphatic diacids used as raw materials are obtained by biological methods. For example, pentanediamine is obtained biologically by the action of lysine decarboxylase on lysine.

In a specific embodiment of the present disclosure, the raw materials for preparing the bio-based polyamide elastomer may optionally include an additive selected from a lubricant, a nucleating agent and an antioxidant, etc. The lubricant includes an aliphatic amide, an aliphatic alcohol, an aliphatic bisamide and a polyethylene wax, etc. The nucleating agent includes silica, talc powder, kaolin, and clay, etc. The antioxidant includes hindered phenolic compounds, hydroquinone compounds, hydroquinol compounds, phosphite compounds and substituted derivatives thereof, iodides thereof, and copper salts thereof, etc.

In a specific embodiment of the present disclosure, the additive is present in the bio-based polyamide elastomer at 5 wt.% or less, more preferably 3 wt.% or less, for example 0.1 wt.% to 3 wt.%.

In a specific embodiment of the present disclosure, the bio-based polyamide elastomer has a density of 1.01 to 1.2 g/mL, preferably 1.01 to 1.07 g/mL.

In a specific embodiment of the present disclosure, the bio-based polyamide elastomer has a Shore hardness of 25D to 80D, for example 33D, 45D, 52D, 63D, 35D, 42D, 67D, 50D, and 71D.

In a specific embodiment of the present disclosure, the bio-based polyamide elastomer has an elongation at break of 200% or more, preferably 300% to 1200%, for example 382%, 539%, 680%, 730%, 426%, 566%, and 387%.

In a specific embodiment of the present disclosure, the bio-based polyamide elastomer has a tensile strength of 15-60 MPa, preferably 17-50 MPa or 20-60 MPa.

In a specific embodiment of the present disclosure, the bio-based polyamide elastomer has an izod notched impact strength of 8 kJ/m² or more, preferably NB (no breaking).

The present disclosure also provides a method for preparing the bio-based polyamide elastomer as described above, comprising the following steps:
S1, preparation of a prepolymer: pentanediamine, a diacid, and a first catalyst are mixed with water to prepare an aqueous polyamide salt solution; the aqueous polyamide salt solution is heated to a temperature of 200-250 °C, e.g. 220 °C; the pressure is increased to 1.5-3.0 MPa, e.g. 1.7 MPa; water is removed by degassing; when the temperature reaches 240-270°C, e.g. 250°C, a vacuum of -0.01 MPa to -0.3 MPa, e.g. -0.06 MPa is applied and kept for 5-60 minutes, e.g. 20 minutes, to obtain a carboxyl-terminated prepolymer;
S2, polymerization of an elastomer: the prepolymer obtained in step S1 is polymerized with polytetramethylene ether glycol in the presence of a second catalyst to obtain a polyamide elastomer.

Wherein, the diacid is any one or more selected from decanedioic acid, undecanedioic acid, dodecanedioic acid, tridecanedioic acid, tetradecanedioic acid, pentadecanedioic acid, hexadecanedioic acid, heptadecanedioic acid, or octadecanedioic acid.

The first catalyst is one or more selected from phosphoric acid, phosphorous acid, trimethyl phosphite, triphenyl phosphite, trimethyl phosphate, triphenyl phosphate, sodium phosphite, sodium hypophosphite, zinc phosphite, calcium phosphite, and potassium phosphate, preferably sodium phosphite and/or sodium hypophosphite.

The second catalyst is one or more selected from a titanium-based catalyst, a zirconium-based catalyst, an antimony-based catalyst, and a germanium-based catalyst. The titanium-based catalyst is preferably one or more selected from tetrabutyl titanate, tetraethyl titanate, and tetrapropyl titanate. The zirconium-based catalyst is preferably tetrabutyl zirconate and/or tetrapropyl zirconate. The antimony-based catalyst is preferably ethylene glycol antimony. The germanium-based catalyst is preferably GeO₂.

Preferably, the molar ratio of pentanediamine to the diacid is in a range from 1 : 1 to 1 : 1.5, more preferably from 1 : 1 to 1 : 1.2.

Preferably, the first catalyst is added in an amount of 0.001 mol% to 5 mol%, preferably 1 mol% to 2 mol%, for example 1.4 mol% or 1.5 mol%, relative to the sum of the pentanediamine, the diacid and the first catalyst.

Preferably, the second catalyst is added in an amount of 0.001 mol% to 3 mol%, preferably 0.01 mol% to 1.4 mol%, for example 1 mol%, or 1.15 mol%, relative to the sum of the prepolymer, polytetramethylene ether glycol and the second catalyst.

Preferably, the aforementioned additive(s) is/are also added to the aqueous polyamide salt solution preferably in an amount of 0.001 mol% to 5 mol% relative to the sum of pentanediamine, the diacid, and the additive(s).

Preferably, steps S1 and S2 are carried out in a vacuum, nitrogen, or inert gas atmosphere. The inert gas generally refers to one or more of neon gas, argon gas, krypton gas, xenon gas and radon gas.

Preferably, in step S1, the mixing is carried out in a salt forming kettle, the heating is carried out in a polymerization kettle, and/or the step S2 is carried out in a polyester kettle.

Preferably, the molar ratio of the prepolymer to polytetramethylene ether glycol is in a range from 0.7 : 1 to 2 : 1, preferably from 0.8 : 1 to 1.5 : 1, more preferably from 0.7 : 1 to 1.3 : 1, even more preferably from 0.8 : 1 to 1.2 : 1, for example 0.94 : 1, 0.92 : 1, 1.12 : 1, 0.84 : 1, 1.10 : 1, 0.87 : 1, 0.93 : 1, 1.14 : 1, 1.48 : 1, 0.86 : 1, 1.45 : 1.

Preferably, polytetramethylene ether glycol has a number-average molecular weight of 500 to 5,000, for example PTMEG 1000 having a molecular weight of 1,000, and PTMEG 2000 having a molecular weight of 1,000.

Preferably, in step S2, the prepolymer and polytetramethylene ether glycol are first mixed at 220-260 °C, e.g. 240 °C for 10-120 minutes, e.g. 90 minutes, and then a second catalyst is added.

Preferably, the polymerization reaction in step S2 is carried out by stirring under a vacuum condition of -0.01 MPa to -0.09 MPa, e.g. -0.06 MPa for 1-5 hours, e.g. 2 hours, then reducing the absolute pressure to 500 Pa or less than 500 Pa within 0.5-2 hours, and then continuing the reaction for 1-10 hours, preferably 1.5-5 hours, more preferably 1-5 hours, for example 1.5 hours, 2 hours, 2.5 hours and 3.5 hours.

Preferably, the polymerization reaction in step S2 also includes introducing nitrogen gas to positive pressure before discharging the polyamide elastomer.

The bio-based polyamide elastomer can be formed into any desired shape by a molding method such as injection molding, blow molding, and film molding, etc.

The bio-based polyamide elastomer according to the present disclosure can be popularized and applied in the field of shoe materials such as skiing shoes, football shoes, and running shoes, etc. Among them, the bio-based polyamide elastomer is used in the shoe outer shell for the skiing shoes, shoe sole for the football shoes and shoe midsole for the running shoes.

On the basis of complying with common knowledge in the art, the above preferred conditions can be arbitrarily combined to obtain the preferred examples of the present disclosure.

The reagents and raw materials used in the present disclosure are commercially available.

The advantageous effect of the present disclosure is that the polyamide elastomer is prepared using pentanediamine and long-chain (C10 to C18) aliphatic diacid which are prepared by biological methods, and a specific proportion of polytetramethylene ether glycol as raw materials, while its properties are comparable to those of the Pebax series elastomers from Arkema Company. The polyamide elastomer has good elasticity, high hardness, and a wide range of application, and at the same time, it has a great price advantage, which is a huge driving force for the industrialization of high-performance polyamide elastomers, especially in the field of footwear applications. The method of preparing the polyamide elastomer of the present disclosure is low cost and the polyamide elastomer is renewable.

### Detailed description

The present disclosure will be further explained below by way of examples, however it is not intended to limit the present disclosure within the scope of the examples. The experimental methods in the following examples that do not specify the specific conditions shall be selected according to conventional methods and conditions, or according to the instructions of the product.

In the following examples and comparative examples, the Shore D hardness is measured in accordance with ISO 7619. The tensile test (including elongation at break and tensile strength) is conducted in accordance with ISO 527. The izod notched impact strength is measured in accordance with ISO 180. The relative viscosity is measured using a Ubbelohde viscometer, using a mobile phase of 96% concentrated sulfuric acid. The density is measured in accordance with ISO 1183.

Raw materials in the examples and comparative examples:
pentanediamine, decanedioic acid, undecanedioic acid, dodecanedioic acid, tetradecanedioic acid, pentadecanedioic acid, and hexadecanedioic acid, are purchased from Cathay (Jin Xiang) Biomaterial Co., Ltd., and are produced by biological methods; polytetramethylene ether glycol (PTMEG) is purchased from Changlian Chemical (Changchun).

### Example 1

Under a nitrogen atmosphere, 366.94 mol of pure water and 19.41 mol of pentanediamine were added to a salt forming kettle under stirring, then 19.41 mol of undecanedioic acid, 4.35 mol of hexanedioic acid, and 0.65 mol of sodium hypophosphite as a catalyst were added to prepare an aqueous polyamide salt solution. Under a nitrogen atmosphere, the aqueous polyamide salt solution was transferred to a polymerization kettle, and heated to 220 °C, the pressure inside the kettle was increased to 1.7 MPa, and water was removed by degassing; when the temperature inside the kettle was increased to 250 °C, the kettle was vacuumized to -0.06 MPa and kept for 20 minutes to give 3.69 mol of carboxyl-terminated prepolymer with a yield of 85% and a number-average molecular weight of 1,406, which was dried for later use.

Under a nitrogen atmosphere, 3.48 mol of carboxyl-terminated prepolymer and 3.69 mol of PTMEG1000 were poured into a reaction kettle and mixed at 240 °C for 90 minutes, 71.7 mmol of catalyst tetrabutyl titanate was added thereto, then the resulting mixture was stirred under vacuum conditions of -0.06 MPa for 2 hours. The absolute pressure inside the kettle was reduced to less than 500 Pa within 1 hour, and then the reaction was continued for 2 hours, after which nitrogen gas was introduced into the kettle to positive pressure. The resulting material was discharged and cut into pellets to give 0.13 mol of polyamide elastomer with a yield of 60% and a number-average molecular weight of 39,596. The structural units contained in the polyamide elastomer and molar ratios thereof are shown in Table 1, and the performance test results of the polyamide elastomer are shown in Table 3.

### Example 2

Under a nitrogen atmosphere, 360.23 mol of pure water and 19.51 mol of pentanediamine were added to a salt forming kettle under stirring, then 22.87 mol of tetradecanedioic acid, and 0.63 mol of sodium hypophosphite as a catalyst were added to prepare an aqueous polyamide salt solution. Under a nitrogen atmosphere, the aqueous polyamide salt solution was transferred to a polymerization kettle and heated to 220 °C, the pressure inside the kettle was increased to 1.7 MPa, and water was removed by degassing; when the temperature inside the kettle was increased to 250 °C, the kettle was vacuumized to -0.06 MPa and kept for 20 minutes to give 2.75 mol of carboxyl-terminated prepolymer with a yield of 82% and a number-average molecular weight of 2,140, which was dried for later use.

Under a nitrogen atmosphere, 2.40 mol of carboxyl-terminated prepolymer and 2.62 mol of PTMEG1000 were poured into a reaction kettle and mixed at 240 °C for 90 minutes, 50.2 mmol of catalyst tetrabutyl titanate was added thereto, then the resulting mixture was stirred under vacuum conditions of -0.06 MPa for 2 hours. The absolute pressure inside the kettle was reduced to less than 500 Pa within 1 hour, and then the reaction was continued for 2 hours, after which nitrogen gas was introduced in the kettle to positive pressure. The resulting material was discharged and cut into pellets to give 0.15 mol of polyamide elastomer with a yield of 66% and a number-average molecular weight of 34,507. The structural units contained in the polyamide elastomer and molar ratios thereof are shown in Table 1, and the performance test results of the polyamide elastomer are shown in Table 3.

### Example 3

Under a nitrogen atmosphere, 347.39 mol of pure water and 19.22 mol of pentanediamine were added to a salt forming kettle under stirring, then 21.65 mol of pentadecanedioic acid, and 0.61 mol of sodium hypophosphite as a catalyst were added to prepare an aqueous polyamide salt solution. Under a nitrogen atmosphere, the aqueous polyamide salt solution was transferred to a polymerization kettle, and heated to 220 °C, the pressure inside the kettle was increased to 1.7 MPa, and water was removed by degassing; when the temperature inside the kettle was increased to 250 °C, the kettle was vacuumized to -0.06 MPa and kept for 20 minutes to give 2.10 mol of carboxyl-terminated prepolymer with a yield of 86% and a number-average molecular weight of 2935, which was dried for later use.

Under a nitrogen atmosphere, 1.74 mol of carboxyl-terminated prepolymer and 1.55 mol of PTMEG2000 were poured into a reaction kettle and mixed at 240 °C for 90 minutes, 32.9 mmol of catalyst tetrabutyl titanate was added thereto, then the resulting mixture was stirred under vacuum conditions of -0.06 MPa for 2 hours. The absolute pressure inside the kettle was reduced to less than 500 Pa within 2 hours, and then the reaction was continued for 1.5 hours, after which nitrogen gas was introduced into the kettle to positive pressure. The resulting material was discharged and cut into pellets to give 0.14 mol of polyamide elastomer with a yield of 68% and a number-average molecular weight of 35,880. The structural units contained in the polyamide elastomer and molar ratios thereof are shown in Table 1, and the performance test results of the polyamide elastomer are shown in Table 3.

### Example 4

Under a nitrogen atmosphere, 332.01 mol of pure water and 18.82 mol of pentanediamine were added to a salt forming kettle under stirring, then 20.24 mol of hexadecanedioic acid, and 0.58 mol of sodium hypophosphite as a catalyst were added to prepare an aqueous polyamide salt solution. Under a nitrogen atmosphere, the aqueous polyamide salt solution was transferred to a polymerization kettle and heated to 220 °C, the pressure inside the kettle was increased to 1.7 MPa, and water was removed by degassing; when the temperature inside the kettle was increased to 250 °C, the kettle was vacuumized to -0.06 MPa and kept for 20 minutes to give 1.19mol of carboxyl-terminated prepolymer with a yield of 84% and a number-average molecular weight of 4948, which was dried for later use.

Under a nitrogen atmosphere, 1.01 mol of carboxyl-terminated prepolymer and 1.20 mol of PTMEG2000 were poured into a reaction kettle and mixed at 240 °C for 90 minutes, 22.1 mmol of catalyst tetrabutyl titanate was added thereto, then the resulting mixture was stirred under vacuum conditions of -0.06 MPa for 2 hours. The absolute pressure inside the kettle was reduced to less than 500 Pa within 1 hour, and then the reaction was continued for 2 hours, after which nitrogen gas was introduced into the kettle to positive pressure. The resulting material was discharged and cut into pellets to give 0.19 mol of polyamide elastomer with a yield of 65% and a number-average molecular weight of 39,022. The structural units contained in the polyamide elastomer and molar ratios thereof are shown in Table 1, and the performance test results of the polyamide elastomer are shown in Table 3.

### Example 5

Under a nitrogen atmosphere, 341.02 mol of pure water and 18.92 mol of pentanediamine were added to a salt forming kettle under stirring, then 21.20 mol of undecanedioic acid, and 0.60 mol of sodium hypophosphite as a catalyst were added to prepare an aqueous polyamide salt solution. Under a nitrogen atmosphere, the aqueous polyamide salt solution was transferred to a polymerization kettle and heated to 220 °C, the pressure inside the kettle was increased to 1.7 MPa and water was removed by degassing; when the temperature inside the kettle was increased to 250 °C, the kettle was vacuumized to -0.06 MPa and kept for 20 minutes to give 1.99 mol of carboxyl-terminated prepolymer with a yield of 87% and a number-average molecular weight of 2,554, which was dried for later use.

Under a nitrogen atmosphere, 2.03 mol of carboxyl-terminated prepolymer and 1.85 mol of PTMEG1000 were poured into a reaction kettle and mixed at 240 °C for 90 minutes, 15.8 mmol of catalyst tetrabutyl titanate was added thereto, then the resulting mixture was stirred under vacuum conditions of -0.06 MPa for 2 hours. The absolute pressure inside the kettle was reduced to less than 500 Pa within 1 hour, and then the reaction was continued for 2.5 hours, after which nitrogen gas was introduced into the kettle to positive pressure. The resulting the material was discharged and cut into pellets to give 0.12 mol of polyamide elastomer with a yield of 65% and a number-average molecular weight of 38,160. The structural units contained in the polyamide elastomer and molar ratios thereof are shown in Table 1, and the performance test results of the polyamide elastomer are shown in Table 3.

### Example 6

Under a nitrogen atmosphere, 346.63 mol of pure water and 19.61 mol of pentanediamine were added to a salt forming kettle under stirring, then 21.17 mol of undecanedioic acid, and 0.61 mol of sodium hypophosphite as a catalyst were added to prepare an aqueous polyamide salt solution. Under a nitrogen atmosphere, the aqueous polyamide salt solution was transferred to a polymerization kettle and heated to 220 °C, the pressure inside the kettle was increased to 1.7 MPa, and water was removed by degassing; when the temperature inside the kettle was increased to 250 °C, the kettle was vacuumized to -0.06 MPa and kept for 20 minutes to give 1.34 mol of carboxyl-terminated prepolymer with a yield of 86% and a number-average molecular weight of 3,763, which was dried for later use.

Under a nitrogen atmosphere, 1.41 mol of carboxyl-terminated prepolymer and 1.63 mol of PTMEG1000 were poured into a reaction kettle and mixed at 240 °C for 90 minutes, 35.4 mmol of catalyst tetrabutyl titanate was added thereto, then the resulting mixture was stirred under vacuum conditions of -0.06 MPa for 2 hours. The absolute pressure inside the kettle was reduced to less than 500 Pa within 1 hour, and then the reaction was continued for 2 hours, after which nitrogen gas was introduced into the kettle to positive pressure. The resulting material was discharged and cut into pellets to give 0.15 mol of polyamide elastomer with a yield of 69% and a number-average molecular weight of 31,860. The structural units contained in the polyamide elastomer and molar ratios thereof are shown in Table 1, and the performance test results of the polyamide elastomer are shown in Table 3.

### Example 7

Under a nitrogen atmosphere, 339.76 mol of pure water and 19.57 mol of pentanediamine were added to a salt forming kettle under stirring, then 29.36 mol of undecanedioic acid, and 0.10 mol of sodium hypophosphite as a catalyst were added to prepare an aqueous polyamide salt solution. Under a nitrogen atmosphere, the aqueous polyamide salt solution was transferred to a polymerization kettle and heated to 220 °C, the pressure inside the kettle was increased to 1.7 MPa, and water was removed by degassing; when the temperature inside the kettle was increased to 250 °C, the kettle was vacuumized to -0.06 MPa and kept for 20 minutes to give 8.35 mol of carboxyl-terminated prepolymer with a yield of 85% and a number-average molecular weight of 852, which was dried for later use.

Under a nitrogen atmosphere, 1.49 mol of carboxyl-terminated prepolymer and 1.61 mol of PTMEG1000 were poured into a reaction kettle and mixed at 240 °C for 90 minutes, 6.21 mmol of catalyst tetrabutyl titanate was added, and the resulting mixture inside the kettle was stirred under vacuum conditions of -0.06 MPa for 2 hours. The absolute pressure was reduced to less than 500 Pa within 1 hour, and then the reaction was continued for 3 hours, after which nitrogen gas was introduced into the kettle to positive pressure. The resulting material was discharged and cut into pellets to give 0.08 mol of polyamide elastomer with a yield of 67.2% and a number-average molecular weight of 22,739. The structural units contained in the polyamide elastomer and molar ratios thereof are shown in Table 1, and the performance test results of the polyamide elastomer are shown in Table 3.

### Example 8

Under a nitrogen atmosphere, 431.78 mol of pure water and 15.66 mol of pentanediamine were added to a salt forming kettle under stirring, then 19.48 mol of tetradecanedioic acid, and 0.07 mol of sodium hypophosphite as a catalyst were added to prepare an aqueous polyamide salt solution. Under a nitrogen atmosphere, the aqueous polyamide salt solution was transferred to a polymerization kettle and heated to 220 °C, and the pressure inside the kettle was increased to 1.7 MPa, and water was removed by degassing; when the temperature inside the kettle was increased to 250 °C, the kettle was vacuumized to -0.06 MPa and kept for 20 minutes to give 3.30 mol of carboxyl-terminated prepolymer with a yield of 86% and a number-average molecular weight of 1,494, which was dried for later use.

Under a nitrogen atmosphere, 1.13 mol of carboxyl-terminated prepolymer and 0.99 mol of PTMEG1000 were poured into a reaction kettle and mixed at 240 °C for 90 minutes, 8.5 mmol of catalyst tetrabutyl titanate was added thereto, then the resulting mixture was stirred under vacuum conditions of -0.06 MPa for 2 hours. The absolute pressure inside the kettle was reduced to less than 500 Pa within 1 hour, and then the reaction was continued for 2.5 hours, after which nitrogen gas was introduced into the kettle to positive pressure; The resulting material was discharged and cut into pellets to give 0.10 mol of polyamide elastomer with a yield of 72% and a number-average molecular weight of 19,659. The structural units contained in the polyamide elastomer and molar ratios thereof are shown in Table 1, and the performance test results of the polyamide elastomer are shown in Table 3.

### Example 9

Under a nitrogen atmosphere, 328.06 mol of pure water and 17.62 mol of pentanediamine were added to a salt forming kettle under stirring, then 18.92 mol of hexadecanedioic acid, and 0.24 mol of sodium hypophosphite as a catalyst were added to prepare an aqueous polyamide salt solution. Under a nitrogen atmosphere, the aqueous polyamide salt solution was transferred to a polymerization kettle and heated to 220 °C, and the pressure inside the kettle was increased to 1.7 MPa, and water was removed by degassing; when the temperature inside the kettle was increased to 250 °C, the kettle was vacuumized to -0.06 MPa and kept for 20 minutes to give 1.07 mol of carboxyl-terminated prepolymer with a yield of 82% and a number-average molecular weight of 4,973, which was dried for later use.

Under a nitrogen atmosphere, 0.46 mol of carboxyl-terminated prepolymer and 0.31 mol of PTMEG2000 were poured into a reaction kettle and mixed at 240 °C for 90 minutes, 1.54 mmol of catalyst tetrabutyl titanate was added thereto, then the resulting mixture was stirred under vacuum conditions of -0.06 MPa for 2 hours. The absolute pressure inside the kettle was reduced to less than 500 Pa within 1 hour, and then the reaction was continued for 3 hours, after which nitrogen gas was introduced into the kettle to positive pressure. The resulting material was discharged and cut into pellets to give 0.12 mol of polyamide elastomer with a yield of 78% and a number-average molecular weight of 18,749. The structural units in the polyamide elastomer and molar ratios thereof are shown in Table 1, and the performance test results of the polyamide elastomer are shown in Table 3.

### Example 10

Under a nitrogen atmosphere, 258.7 mol of pure water and 17.62 mol of pentanediamine were added to a salt forming kettle under stirring, then 19.23 mol of decanedioic acid, and 0.061 mol of sodium hypophosphite as a catalyst were added to prepare an aqueous polyamide salt solution. Under a nitrogen atmosphere, the aqueous polyamide salt solution was transferred to a polymerization kettle and heated to 220 °C, and the pressure inside the kettle was increased to 1.7 MPa, and water was removed by degassing; when the temperature inside the kettle was increased to 250 °C, the kettle was vacuumized to -0.06 MPa and kept for 20 minutes to give 1.35 mol of carboxyl-terminated prepolymer with a yield of 83% and a number-average molecular weight of 3,162, which was dried for later use.

Under a nitrogen atmosphere, 0.81 mol of carboxyl-terminated prepolymer and 0.94 mol of PTMEG2000 were poured into a reaction kettle and mixed at 240 °C for 90 minutes, 5.25 mmol of catalyst tetrabutyl titanate was added thereto, then the resulting mixture was stirred under vacuum conditions of -0.06 MPa for 2 hours. The absolute pressure inside the kettle was reduced to less than 500 Pa within 1 hour, and then the reaction was continued for 3 hours, after which nitrogen gas was introduced into the kettle to positive pressure. The resulting material was discharged and cut into pellets to give 0.09 mol of polyamide elastomer with a yield of 70% and a number-average molecular weight of 33,711. The structural units contained in the polyamide elastomer and molar ratios thereof are shown in Table 2, and the performance test results of the polyamide elastomer are shown in Table 3.

### Example 11

Under a nitrogen atmosphere, 309.16 mol of pure water and 19.57 mol of pentanediamine were added to a salt forming kettle under stirring, then 20.85 mol of dodecanedioic acid, and 0.08 mol of sodium hypophosphite as a catalyst were added to prepare an aqueous polyamide salt solution. Under a nitrogen atmosphere, the aqueous polyamide salt solution was transferred to a polymerization kettle and heated to 220 °C, and the pressure inside the kettle was increased to 1.7 MPa, and water was removed by degassing; when the temperature inside the kettle was increased to 250 °C, the kettle was vacuumized to -0.06 MPa and kept for 20 minutes to give 1.03 mol of carboxyl-terminated prepolymer with a yield of 81% and a number-average molecular weight of 4,778, which was dried for later use.

Under a nitrogen atmosphere, 0.45 mol of carboxyl-terminated prepolymer and 0.31 mol of PTMEG2000 were poured into a reaction kettle and mixed at 240 °C for 90 minutes, 7.6 mmol of catalyst tetrabutyl titanate was added thereto, then the resulting mixture was stirred under vacuum conditions of -0.06 MPa for 2 hours. The absolute pressure was reduced to less than 500 Pa within 1 hour, and then the reaction was continued for 3 hours, after which nitrogen gas was introduced into the kettle to positive pressure. The resulting material was discharged and cut into pellets to obtain 0.0 mol of polyamide elastomer with a yield of 76% and a number-average molecular weight of 18,159. The structural units contained in the polyamide elastomer and molar ratios thereof are shown in Table 2, and the performance test results of the polyamide elastomer are shown in Table 3.

### Comparative example 1

Under a nitrogen atmosphere, 588.2 mol of pure water and 33.82 mol of pentanediamine were added to a salt forming kettle under stirring, then 35.38 mol of hexanedioic acid, and 0.69 mol of sodium hypophosphite as a catalyst were added to prepare an aqueous polyamide salt solution. Under a nitrogen atmosphere, the aqueous polyamide salt solution was transferred to a polymerization kettle and heated to 220 °C, and the pressure inside the kettle was increased to 1.7 MPa, and water was removed by degassing; when the temperature inside the kettle was increased to 250 °C, the kettle was vacuumized to -0.06 MPa and kept for 20 minutes to give 1.34 mol of carboxyl-terminated prepolymer with a yield of 86% and a number-average molecular weight of 4,762, which was dried for later use.

Under a nitrogen atmosphere, 1.29 mol of carboxyl-terminated prepolymer and 1.48 mol of PTMEG1000 were poured into a reaction kettle and mixed at 240 °C for 90 minutes, 41.6 mmol of catalyst tetrabutyl titanate was added thereto, then the resulting mixture was stirred under vacuum conditions of -0.06 MPa for 2 hours. The absolute pressure inside the kettle was reduced to less than 500 Pa within 1 hour, and then the reaction was continued for 2 hours, after which nitrogen gas was introduced into the kettle to positive pressure. The resulting material was discharged and cut into pellets to obtain 0.13 mol of polyamide elastomer with a yield of 69% and a number-average molecular weight of 39,170. Structural units contained in the polyamide elastomer and molar ratios thereof are shown in Table 2, and the performance test results of the polyamide elastomer are shown in Table 3.

### Comparative example 2

Under a nitrogen atmosphere, 393.12 mol of pure water and 22.97 mol of pentanediamine were added to a salt forming kettle under stirring, then 23.28 mol of undecanedioic acid, and 0.46 mol of sodium hypophosphite as a catalyst were added to prepare a polyamide salt solution. Under a nitrogen atmosphere, the aqueous polyamide salt solution was transferred to a polymerization kettle and heated to 220 °C, and the pressure inside the kettle was increased to 1.7 MPa, and water was removed by degassing when the temperature inside the kettle was increased to 250 °C, the kettle was vacuumized to -0.06 MPa and kept for 20 minutes to give 0.27mol of carboxyl-terminated prepolymer with a yield of 86% and a number-average molecular weight of 20,989, which was dried for later use.

Under a nitrogen atmosphere, 0.25 mol of carboxyl-terminated prepolymer, 1.16 mol of PTMEG1000 and 0.48 mol of hexanedioic acid were poured into a reaction kettle and mixed at 240 °C for 90 minutes, 21.1 mmol of catalyst tetrabutyl titanate was added thereto, then the resulting mixture was stirred under vacuum conditions of -0.06 MPa for 2 hours. The absolute pressure inside the kettle was reduced to less than 500 Pa within 1 hour, and then the reaction was continued for 2 hours, after which nitrogen gas was introduced into the kettle to positive pressure. the resulting material was discharged and cut into pellets to give 0.29 mol of polyamide elastomer with a yield of 68% and a number-average molecular weight of 15,112. The structural units contained in the polyamide elastomer and molar ratios thereof are shown in Table 2, and the performance test results of the polyamide elastomer are shown in Table 3.

**Table 1**

| | Structural unit (mol%) | Ex.1 (x=9) | Ex. 2 (x=12) | Ex. 3 (x=13) | Ex. 4 (x=14) | Ex. 5 (x=9) | Ex. 6 (x=9) | Ex. 7 (x=9) | Ex. 8 (x=12) |
|---|---|---|---|---|---|---|---|---|---|
| A | 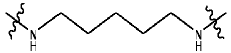 | 18 | 21 | 19 | 22 | 28 | 30 | 10 | 19 |
| B | 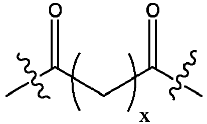 | 18 | 25 | 22 | 24 | 31 | 32 | 15 | 24 |
| E | 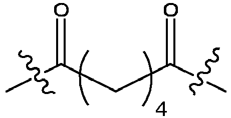 | 4 | 0 | 0 | 0 | 0 | 0 | 0 | 0 |
| D | 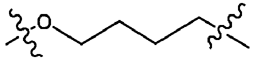 | 60 | 54 | 59 | 54 | 41 | 38 | 75 | 57 |

**Table 2**

| | Structural unit (mol%) | Ex. 9 (x=14) | Ex. 10 (x=8) | Ex. 11 (x=10) | CEx. 1 (x=0) | CEx. 2 (x=9) |
|---|---|---|---|---|---|---|
| A | 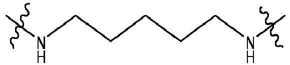 | 29 | 20 | 37 | 36 | 35 |
| B | 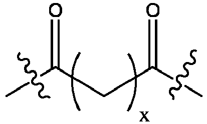 | 31 | 22 | 40 | 0 | 35 |
| E | 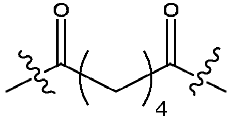 | 0 | 0 | 0 | 38 | 0 |
| D | 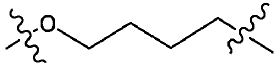 | 40 | 58 | 23 | 26 | 30 |

**Table 3**

| | Density (g/mL) | Relative viscosity | Shore hardness | Elongation at break (%) | Tensile strength (MPa) | Izod notched impact strength (kJ/m²) |
|---|---|---|---|---|---|---|
| Ex. 1 | 1.05 | 1.38 | 33D | 730 | 28 | NB |
| Ex. 2 | 1.05 | 1.42 | 40D | 680 | 32 | NB |
| Ex. 3 | 1.06 | 1.47 | 52D | 539 | 35 | NB |
| Ex. 4 | 1.06 | 1.58 | 63D | 382 | 42 | NB |
| Ex. 5 | 1.05 | 1.46 | 45D | 576 | 36 | NB |
| Ex. 6 | 1.06 | 1.54 | 55D | 481 | 39 | NB |
| Ex. 7 | 1.01 | 1.13 | 35D | 609 | 17 | NB |
| Ex. 8 | 1.02 | 1.19 | 42D | 589 | 19 | NB |
| Ex. 9 | 1.04 | 1.39 | 67D | 426 | 45 | 18 |
| Ex. 10 | 1.06 | 1.27 | 50D | 566 | 39 | NB |
| Ex. 11 | 1.03 | 1.39 | 71D | 387 | 45 | 12 |
| CEx. 1 | 1.10 | 2.1 | 78D | 105 | 59 | 11 |
| CEx. 2 | 1.08 | 1.9 | 83D | 67 | 62 | 9 |

As can be seen from the above examples (Ex) and comparative examples (CEx), the polyamide elastomer in examples 1 to 11 of the present disclosure prepared using pentanediamine and long-chain (C10 to C18) aliphatic diacid which are prepared by biological methods and a specific proportion of polytetramethylene ether glycol as raw materials, has excellent performance and a stable supply of polymerization monomer, solves the problem of the excessively high cost of polyamide elastomer, expands the application scenarios of elastomers and has very high commercial value. In contrast, in comparative example 1, only hexanediacid was used without using long-chain (C10 to C18) aliphatic diacid, resulting in high viscosity and low elongation at break of the polyamide elastomer. In comparative example 2, excess polytetramethylene ether glycol was used as raw material, resulting in an excessively high Shore hardness D, excessively low elongation at break and excessively high tensile strength of the polyamide elastomer.

## Claims

1. A bio-based polyamide elastomer comprising a structural unit represented by formula C and a structural unit represented by formula D, which are connected by an ester group; and the structural unit represented by formula C comprises a structural unit represented by formula A and a structural unit represented by formula B, which are connected by an amide bond; 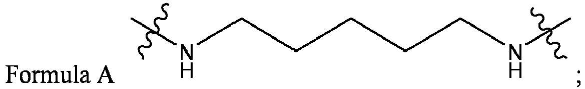 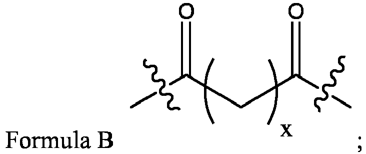 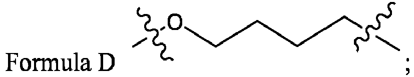
wherein, x is an integer ranging from 8 to 16;
wherein, the bio-based polyamide elastomer has a relative viscosity of 1.0 to 2.0, preferably 1.1 to 1.7, and/or a segment formed by the structural unit represented by formula C has a number-average molecular weight of 800 to 12,000; and/or
the bio-based polyamide elastomer has a number-average molecular weight of 10,000 to 70,000; and/or
a segment formed by the structural unit represented by formula D has a number-average molecular weight of 500 to 5,000.

2. The bio-based polyamide elastomer according to claim 1, wherein the structural unit represented by formula C also comprises a structural unit represented by formula E, and the structural units represented by formulas A, B, and E are connected by amide bonds,

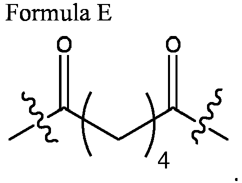

3. The bio-based polyamide elastomer according to claim 1, wherein the structural unit represented by formula A has a molar content of 10 mol% to 40 mol%, the structural unit represented by formula B has a molar content of 15 mol% to 40 mol%, the structural unit represented by formula D has a molar content of 35 mol% to 65 mol%, and the sum of the structural units represented by formulas A, B, and D is 100 mol%; and
preferably, the molar ratio of the structural unit represented by formula A to the structural unit represented by formula B is 1 : 1.0 to 1 : 1.5.

4. The bio-based polyamide elastomer according to claim 1, wherein the bio-based polyamide elastomer comprises pentanediamine, a diacid and polytetramethylene ether glycol as the raw materials, wherein the diacid is any one or more selected from decanedioic acid, undecanedioic acid, dodecanedioic acid, tridecanedioic acid, tetradecanedioic acid, pentadecanedioic acid, hexadecanedioic acid, heptadecanedioic acid or octadecanedioic acid; and
preferably, the molar ratio of a prepolymer to polytetramethylene ether glycol is 0.7 : 1 to 2 : 1.

5. The bio-based polyamide elastomer according to claim 1, wherein the bio-based polyamide elastomer has a density of 1.01 g/mL to 1.2 g/mL; and/or
the bio-based polyamide elastomer has Shore hardness ranges from 25D to 80D; and/or
the bio-based polyamide elastomer has an elongation at break of 200% or more; and/or
the bio-based polyamide elastomer has a tensile strength of 15 MPa to 60 MPa, preferably 17 MPa to 50 MPa or 20 MPa to 60 MPa; and/or
the bio-based polyamide elastomer has an Izod notched impact strength of 8 kJ/m² or more, preferably NB (no breaking).

6. A method for preparing the bio-based polyamide elastomer according to any one of claims 1 to 5, comprising the following steps:
S1, preparation of a prepolymer: pentanediamine, a diacid and a first catalyst are mixed with water to prepare an aqueous polyamide salt solution; the aqueous polyamide salt solution is heated to a temperature of 200 to 250 °C, the pressure is increased to 1.5 to 3.0 MPa and water is removed by degassing; when the temperature reaches 240 to 270 °C, a vacuum of -0.01 MPa to -0.3 MPa is applied and kept for 5 to 60 minutes to obtain a carboxyl-terminated prepolymer;
S2, polymerization of an elastomer: the carboxyl-terminated prepolymer obtained in step S1 is polymerized with polytetramethylene ether glycol in the presence of a second catalyst to obtain a polyamide elastomer;
wherein the diacid is any one or more selected from decanedioic acid, undecanedioic acid, dodecanedioic acid, tridecanedioic acid, tetradecanedioic acid, pentadecanedioic acid, hexadecanedioic acid, heptadecanedioic acid or octadecanedioic acid; and/or
the first catalyst is one or more selected from phosphoric acid, phosphorous acid, trimethyl phosphite, triphenyl phosphite, trimethyl phosphate, triphenyl phosphate, sodium phosphite, sodium hypophosphate, zinc phosphite, calcium phosphite and potassium phosphate, preferably sodium phosphate and/or sodium hypophosphate; and/or
the second catalyst is one or more selected from a titanium-based catalyst, a zirconium-based catalyst, an antimony-based catalyst and a germanium-based catalyst.

7. The method for preparing the bio-based polyamide elastomer according to claim 6, wherein the first catalyst is added in an amount of 0.001 mol% to 5 mol% relative to the sum of pentanediamine, the diacid and the first catalyst; and/or, the second catalyst is added in an amount of 0.001 mol% to 3 mol% relative to the sum of the prepolymer, polytetramethylene ether glycol and the second catalyst.

8. The method for preparing the bio-based polyamide elastomer according to claim 6, wherein the molar ratio of the prepolymer to polytetramethylene ether glycol is 0.7 : 1 to 1.3 : 1.

9. The method for preparing the bio-based polyamide elastomer according to claim 6, wherein the molar ratio of pentanediamine to the diacid is 1 : 1.0 to 1 : 1.5, preferably 1 : 1.0 to 1 : 1.2.

10. The method for preparing the bio-based polyamide elastomer according to claim 6, wherein,
in step S2, the prepolymer and polytetramethylene ether glycol are first mixed at 220 to 260 °C for 10 to 120 minutes, and then a second catalyst is added; and/or
polymerization reaction in step S2 is carried out by stirring under a vacuum condition of -0.01 MPa to -0.09 MPa for 1 to 5 hours, then reducing the absolute pressure to 500 Pa or less within 0.5 to 2 hours to allow the reactants to be in a high vacuum and then continuing the reaction for 1 to 10 hours.
